# Europäisches Patentamt
## European Patent Office
## Office européen des brevets

(11) Veröffentlichungsnummer: **0 118 486**
**B1**

(12) **EUROPÄISCHE PATENTSCHRIFT**

(45) Veröffentlichungstag der Patentschrift:
**29.06.88**

(21) Anmeldenummer: **83902741.4**

(22) Anmeldetag: **26.08.83**

(86) Internationale Anmeldenummer:
**PCT/AT 83/00026**

(87) Internationale Veröffentlichungsnummer:
**WO 84/00914 (15.03.84 Gazette 84/07)**

(51) Int. Cl.⁴: **B 23 Q 3/154**

(54) **ELEKTROMAGNETBALKEN.**

(30) Priorität: **02.09.82 AT 3294/82**

(43) Veröffentlichungstag der Anmeldung:
**19.09.84 Patentblatt 84/38**

(45) Bekanntmachung des Hinweises auf die Patenterteilung:
**29.06.88 Patentblatt 88/26**

(84) Benannte Vertragsstaaten:
**AT BE CH DE FR GB LI NL**

(56) Entgegenhaltungen:
**DE-A-2 540 136**
**DE-C-265 114**
**DE-C-306 914**
**FR-A-562 949**
**US-A-3 779 063**
**US-A-4 009 459**

(73) Patentinhaber: **Zimmer, Johannes, Ebentaler Strasse 133, A-9020 Klagenfurt (AT)**

(72) Erfinder: **GASPER, Reinhold, Terndorf 10 a, A-9020 Klagenfurt (AT)**

(74) Vertreter: **Puchberger, Rolf, Dipl. Ing., Patentanwälte, Dipl. Ing. Georg Puchberger Dipl. Ing. Rolf Puchberger Dipl. Ing. Peter Puchberger Singerstrasse 13 Postfach 55, A-1010 Wien (AT)**

LIBER, STOCKHOLM 1988

EP 0 118 486 B1

## Beschreibung

### Technisches Gebiet

Die Erfindung betrifft einen Elektromagnetbalken mit einem rohr- oder kastenförmigen Trägerprofil mit darin eingesetztem Magnetsystem, das aus mindestens einer Magnetspule, einem Magnetkern und einer Magnetschlußplatte besteht, wobei das Trägerprofil zur Ebene durch die Achsen der Magnetkerne symmetrisch ist und mit den Magnetkernen verbunden ist. Bei derartigen Elektromagnetbalken ist es ein großes Problem, daß diese auch bei großen Baulängen bzw. Arbeitsbreiten in jedem Temperatur- bzw. Betriebszustand vollkommen gerade bzw. eben bleiben und deshalb für höchste Präzisionsanforderungen eingesetzt werden können.

### Stand der Technik

Die bisher bekannten Konstruktionen bestehen meistens aus einer Platte, die mit einer Tragkonstruktion versteift wird und in die Elektromagnete eingesetzt sind. Die einzelnen Elektromagnete sind an ihrem freien Polende in die Platte eingesetzt (z. B. eingeschraubt) und am anderen Polende mittels der Schlußleiste miteinander verbunden.

Ein Beispiel für eine derartige Konstruktion ist aus der DE-A1-2 540 136 bekannt. Hier umgreifen die Schenkel eines Profiles das Magnetsystem über seine gesamte Länge und am offenen Ende des Profiles ist eine Abdeckung in Form einer relativ dicken Abschlußplatte vorgesehen. Eine gleichmäßige Wärmeableitung ist bei dieser Konstruktion nicht gegeben.

Da es für die Verwendung der Magnetbalken wünschenswert bzw. verfahrenstechnisch erforderlich ist, daß der Magnetbalken möglichst gerade und möglichst eben sein soll, ist es erforderlich, mit zunehmender Baulänge die Platte samt Tragkonstruktion zunehmend stärker zu dimensionieren. Die, wie vorbeschrieben, schon aus mechanischen Stabilitätsgründen schwierige Aufgabenstellung wird zusätzlich noch dadurch sehr erschwert, daß Magnetbalken in der Praxis - gebrauchsbedingt - nicht nur mechanisch, sondern vor allem auch elektrisch beansprucht und hiedurch starken Temperaturschwankungen ausgesetzt werden. Im ruhenden Zustand, d.h. stromlos, ist der Magnetbalken kalt. Je nach eingestellter Anpreßkraft bzw. Stromstärke entstehen verschieden hohe Betriebstemperaturen.

Nach dem bisherigen Stand der Technik ist es nahezu unmöglich, lange Magnetbalken, d.h. Magnetbalken für große Arbeitsbreiten, ausreichend stabil und temperaturunabhängig zu bauen.

Nach dem heutigen Stand der Technik sind bei Magnetbalken größerer Baulänge temperaturabhängige Verbiegungen unvermeidbar. Die Größenordnung solcher unerwünschter Verbiegungen kann bei langen Magnetbalken mehr als 1 mm betragen und kann somit erhebliche Ungenauigkeiten für den durch den Magnetbalken zu leistenden Bearbeitungsvorgang zur Folge haben.

Mitunter werden Kühlgebläse eingebaut, um damit die Temperatur und somit auch den Geradheitszustand konstant halten zu können. Es gibt auch noch andere Kühlmethoden. Kühlungen sind nicht nur kostenaufwendig, sondern sind nur als eine notdürftige Maßnahme anzusehen, um die wärmebedingten Verbiegungen behelfsmäßig in einigermaßen akzeptablen Grenzen halten zu können.

Volle Präzision in der Geradheit von Elektromagnetbalken, die verschiedenen Arbeitsbelastungen bzw. Stromstärken und daraus folgenden Temperaturschwankungen ausgesetzt sind, ist nach dem bisherigen Stand der Technik nicht zu erreichen.

### Aufgabe der Erfindung

Gegenstand der vorliegenden Erfindung ist ein neuartiges Konstruktionsprinzip, das Verbiegungen durch Temperaturungleichmäßigkeit unmöglich macht.

Dieser Erfindung liegt die Erkenntnis zugrunde, daß nicht die absoluten Temperaturunterschiede, sondern nur die im Inneren des Konstruktionsgefüges relativ zueinander auftretenden Temperaturunterschiede die störenden Verbiegungen verursachen.

### Offenbarung der Erfindung

Erfindungsgemäß wird jetzt bei dem eingangs erwähnten Elektromagnetbalken vorgeschlagen, daß das Trägerprofil aus zwei miteinander verbundenen Teilprofilen besteht, wobei die Formgebung und die Materialverteilung der beiden Profilteile so getroffen ist, daß die Wärmeableitung beider Profilteile zu einer zur Symmetrieebene durch die Achsen der Magnetkerne rechtwinkelig stehenden Ebene gleich ist.

Durch die erfinderischen Maßnahmen geben beide Profilteile die gleichen Wärmemengen ab und es herrschen somit im Elektromagnetbalken vertikal und horizontal ausgleichende Verhältnisse, so daß Verbiegungen aufgrund der Wärme vermieden werden.

### Kurze Beschreibung der Zeichungen

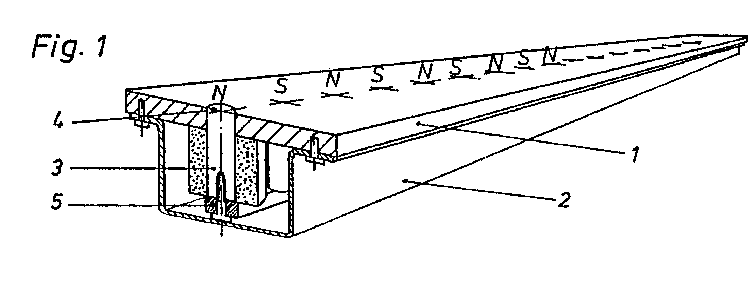

Die Erfindung wird anhand der Zeichnungen beispielsweise näher beschrieben. Fig. 1 zeigt eine Konstruktion des Standes der Technik, Fig. 2 einen Schnitt durch eine erfindungsgemäße Magnetbalkenkonstruktion, Fig. 3 eine andere Ausführungsform der Erfindung und Fig. 4 eine weitere Ausführungsform; Fig. 5 zeigt eine andere Art einer erfindungsgemäßen Konstruktion.

Gemäß Fig .1 ist die Platte 1 durch eine Tragkonstruktion 2 versteift, und die Platte 1 ist mit Elektromagnetsystemen 3 verbunden. Die einzelnen Elektromagnete der Elektromagnetsysteme 3 sind an ihren freien Polenden 4 mit der Platte 1, z. B. durch Einschrauben, verbunden und sie sind am anderen Polende mittels der Schlußleiste 5 miteinander verbunden.

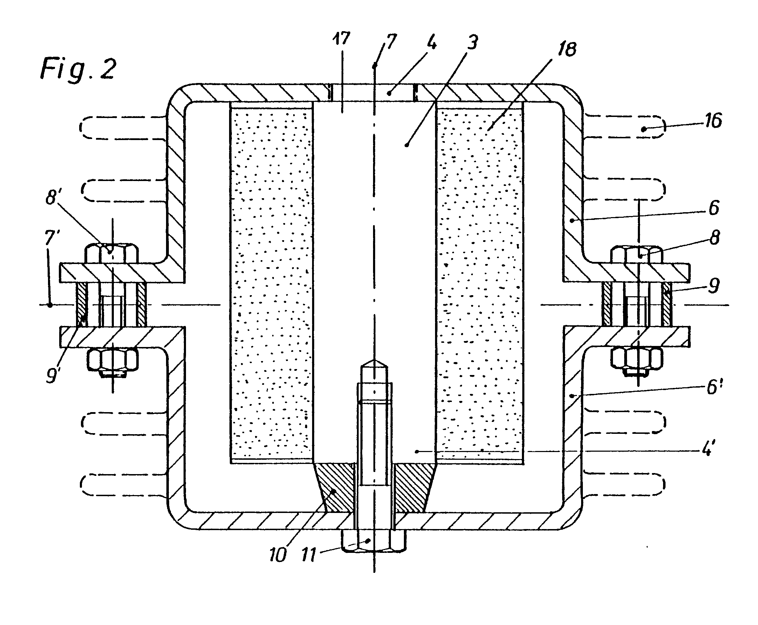

Die in Fig. 2 dargestellte erste Art der erfindungsgemäßen Magnetbalkenkonstruktion besteht aus einem kastenförmigen Profilteil 6, 6' aus in sich gleichartigem und, durch seine Formgebung bedingt, außerdem auch gleichmäßig und auf die Mittelebenen 7, 7' bezogen, symmetrisch geformtem Material, wie z. B. Leichtmetall.

In diese Konstruktion, die z. B. durch Verschraubungen 8, 8' und Distanzhülsen 9, 9' verbunden ist, werden die Elektromagnetsysteme 3 (mit Drahtspulen 18 bewickelte Magnetkerne 17, vorzugsweise in gepaarter Anordnung (so eingesetzt, daß die Wärmeableitung an beiden Polenden 4, 4' durch formschlüssige Verbindung mit den Profilteilen 6, 6' symmetrisch und gleichmäßig nach allen Seiten erfolgt. An den Polenden 4' erfolgt der Wärmeübergang durch die Magnetschlußleiste 10.

Das Polende 4 ist in den Profilteil 6 eingeschraubt und das Polende 4' ist mittels Verschraubung 11 sowie Magnetschlußleiste 10 mit dem Profilteil 6' verbunden.

Als ein weiteres erfindungsgemäßes Kennzeichen kann an den magnetleitfähigen Schlußleisten 10 zusätzlich noch eine magnetisch nicht leitfähige Wärmeableitschiene 12 befestigt werden, die dann ihrerseits durch formschlüssige Verbindung den Wärmeübergang zu dem der Arbeitsseite gegenüberliegenden Teil des Träger- und Wärmeableitprofiles bewirkt.

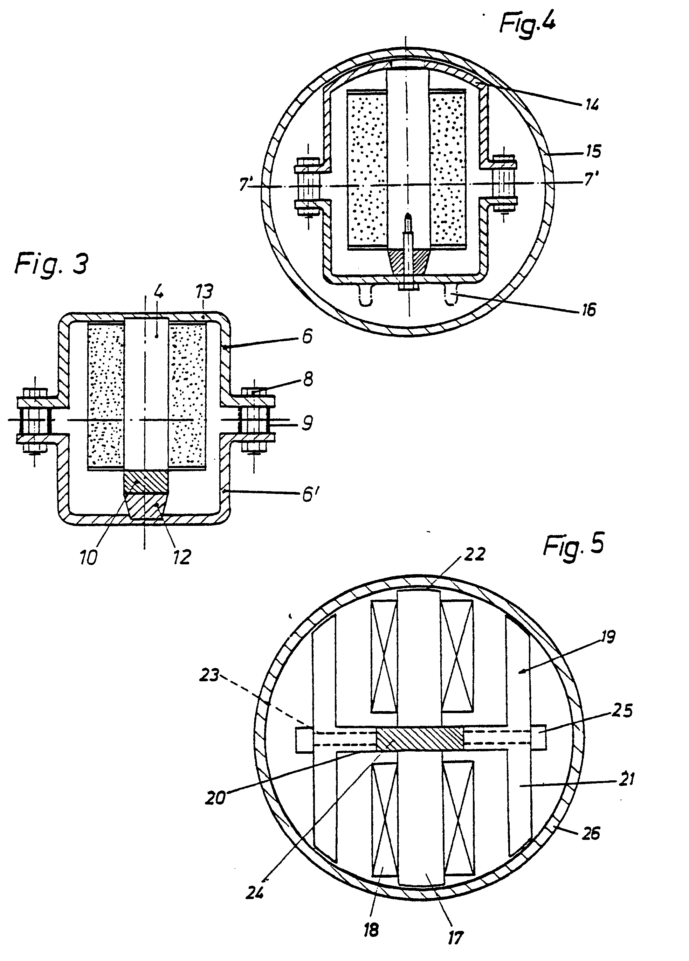

Diese Variante wurde in Fig. 3 dargestellt.

Fig. 3 zeigt die erfindungsgemäße Magnetbalkenkonstruktion in einer Variante, bei der die Magnetkerne an ihrem der Arbeitsfläche 13 zugewendeten Polende 4 nicht in das Profil 6 eingeschraubt sind, sondern durch die Klemmverbindung 8 und 9 zwischen den beiden Profilhälften 6, 6' festgehalten werden, sodaß die aus dem freien Polende 4 der Kerne austretende Magnetkraft das Profil 6 bzw. die Wand 13 durchdringen muß.

Fig. 4 zeigt einen erfindungsgemäß konstruierten Magnetbalken mit einem gewölbten Profil 14, dessen Form für den Einbau in eine Magnet-Walze 15 geeignet ist.

Beim Einbau in Magnetwalzen ist die Geradheit von besonders großer Wichtigkeit, um den Spalt zwischen Magnetbalken und Walzenmantel so gering wie möglich einstellen zu können. Die Symmetrieebene 7' ist, dem Erfindungsgedanken folgend, nicht im Sinne einer Formalsymmetrie, sondern im Sinne einer Wärmeableitungssymmetrie zu verstehen.

Zusätzlich wurde in den Fig. 2 und 4 die Möglichkeit der Anbringung zusätzlicher Kühlrippen 16 strichliert angedeutet.

Die Möglichkeiten, Doppel- oder Dreifachmagnetbalken unter Zugrundelegung des Erfindungsgedankens zu konstruieren, ergibt sich als logische Folgerung und wurde deshalb zeichnerisch nicht dargestellt.

In Fig. 5 ist eine zweite Art der erfindungsgemäßen Konstruktion dargestellt. Zur Darstellung wurde eine Magnetwalze gewählt, in der der oder die Elektromagnete angeordnet sind. Es ist aber selbstverständlich auch möglich, die erfindungsgemäße Konstruktion in einem anderen Mantel vorzusehen. Das von der Arbeitsfläche abgewandte Ende der Magnetkerne 17 ruht auch hier wieder auf einer Magnetschlußleiste 24. Diese Magnetschlußleiste 24 ist in ein H-förmiges Trägerprofil 19 in dessen Querholm 20 eingesetzt. Die Verbindung zwischen dem eigentlichen Trägerprofil und der Magnetschlußleiste 24 kann z. B. durch Schrauben 23 erfolgen. Das H-förmige Trägerprofil 19 ist entweder im Bereich seiner Querholme 20 an Trägern 25 aufgehängt oder aber die Längsholme 21 ruhen auf entsprechenden Trägern (nicht dargestellt). In diesem Fall ist jedoch die Magnetschlußleiste 24 nur auf der einen Seite mit einem Magnetkern 17 verbunden. Dadurch, daß der Magnetkern 17 mit dem symmetrischen Trägerprofil 19 eine Konstruktionseinheit bildet, erfolgt auch eine symmetrische Wärmeableitung der durch den Stromdurchfluß durch die Spulen 18 hervorgerufenen Wärme. Es ergibt sich so eine bimetalleffektfreie Tragbalkenkonstruktion, die sowohl als wärmeableitender als auch als Abstrahlungskörper dient.

Dadurch, daß hier für den Magnetbalken keine Deckplatte vorgesehen wird, kann der Magnetkern 17 ganz nahe an den Mantel 26 herangeführt werden und gegebenenfalls sogar an diesem anliegen. Meist wird jedoch ein minimaler Spalt 22 zwischen dem Ende des Magnetkernes 17 und dem Mantel 26 belassen. Zusätzlich braucht der Kern 17 nur minimal über die Enden der Spulen 18 hervorstehen. Dadurch ergibt sich ein sehr geringer Abstand zu jenen Vorrichtungen, auf die mit dem Magnetfeld eingewirkt werden soll, also z. B. eine Rakel aus magnetisierbarem Material, Anpreßvorrichtungen u.dgl. Dies bedeutet, daß man entweder bei gleicher Stromzufuhr zu den Spulen 18 ein stärkeres Magnetfeld hat oder aber, daß man die gleiche Magnetkraft mit einem geringeren Energieaufwand erreichen kann, was wiederum eine verringerte Wärmeerzeugung hervorruft.

Die Längsholme 21 des Trägerprofils 19 können sich entweder einstückig über die gesamte Länge des Magnetbalkens erstrecken, oder aber jedes Trägerprofil 19 umschließt nur einen bzw. zwei Elektromagnete, wobei dann die einzelnen Trägerprofile durch die sich über alle Elektromagnete erstreckende Magnetschlußleiste 24 und gegebenenfalls durch die Aufhängeleisten 25 miteinander verbunden sind, d.h. die Tragkonstruktion ist hier abschnittsweise aufgeteilt.

Zur Unterstützung der Wärmeabfuhr kann noch zusätzlich eine Kühlung vorgesehen sein, z. B. ein Gebläse, das in der Mitte des Elektromagnetbalkens vorgesehen ist. Zu diesem Zweck kann z. B. auf der einen Seite der H-förmigen Trägerprofile 19 ein Kanal gebildet sein, der über die Länge verteilte Öffnungen aufweist, aus denen dann entsprechende Kühlluft austritt.

Es sei ausdrücklich darauf hingewiesen, daß der in der Fig. 5 in der unteren Hälfte dargestellte Elektromagnet weggelassen werden kann. Die Ausführungsform mit den zwei einander gegenüberliegenden Elektromagneten kann bei einer Kraftoptimierung oder in Spezialfällen angewendet werden. Sind die Elektromagnete nur mit der einen Seite der Magnetschlußleiste 24 verbunden, so können der oder die Querholme 20 auch tiefer gesetzt werden, sodaß dann die Kerne 17 verlängert werden können.

## Patentansprüche

1. Elektromagnetbalken mit einem rohr- oder kastenförmigen Trägerprofil mit darin eingesetztem Magnetsystem (3), das aus mindestens einer Magnetspule (18), einem Magnetkern (17) und einer Magnetschlußplatte (10) besteht, wobei das Trägerprofil zur Ebene (7) durch die Achsen der Magnetkerne (17) symmetrisch ist und mit den Magnetkernen (17) verbunden ist, dadurch gekennzeichnet, daß das Trägerprofil aus zwei miteinander verbundenen Teilprofilen (6, 6') besteht, wobei die Formgebung und die Materialverteilung der beiden Profilteile (6, 6') so getroffen ist, daß die Wärmeableitung beider Profilteile (6, 6') zu einer zur Symmetrieebene (7) durch die Achsen der Magnetkerne (17) rechtwinkelig stehenden Ebene (7') gleich ist.

2. Elektromagnetbalken nach Anspruch 1, dadurch gekennzeichnet, daß die beiden Teilprofile (6, 6') sowohl hinsichtlich Form als auch Material gleich sind.

3. Elektromagnetbalken nach Anspruch 1, dadurch gekennzeichnet, das von der Arbeitsseite abgewendete Polende (4') über mindestens eine Wärmeleitschiene (12) mit dem von der Arbeitsseite entfernt liegenden Teilprofil (6') wärmeleitfähig verbunden ist.

4. Elektromagnetbalken mit einem Trägerprofil (19), das mindestens ein Magnetsystem bestehend aus wenigstens einer Magnetspule (18), einem Magnetkern (17) und einer Magnetschlußleiste (24) aufweist, wobei der oder die Magnetkerne (17) mit dem Trägerprofil (19) verbunden ist bzw. sind, dadurch gekennzeichnet, daß jeder Magnetkern (17) an seinem die Magnetschlußleiste (24) tragenden Polende (4') mit einem H-förmigen Trägerprofil (19) verbunden ist, wobei vorzugsweise symmetrisch zum Querholm (20) des H-förmigen Trägerprofiles (19) je ein Elektromagnet (3) vorgesehen ist.

5. Elektromagnetbalken nach Anspruch 4, dadurch gekennzeichnet, daß der Magnetkern (17) die Längsholme (21) des H-förmigen Profiles (19) überragt und bis auf einen minimalen Abstand (22) an die Arbeitsfläche (13) herangeführt ist, wobei der Magnetkern (17) die Magnetspule (18) nur geringfügig überragt.

6. Elektromagnetbalken nach einem der Ansprüche 4 oder 5, dadurch gekennzeichnet, daß für jeden Magnetkern (17) ein eigenes H-förmiges Trägerprofil (19) vorgesehen ist und die einzelnen Trägerprofile (19) durch mindestens eine Leiste miteinander verbunden sind.

7. Elektromagnetbalken nach einem der Ansprüche 4 bis 6, dadurch gekennzeichnet, daß die Magnetschlußleiste (24) in den Querholm (20) eingesetzt und mit diesem verbunden ist, vorzugsweise durch eine Schraubverbindung (Schraube 23).

## Claims

1. An electromagnet beam comprising a tubular or box-like bearer section member having in it a magnet system (3) comprising at least one magnet winding (18), one magnet core (17) and one magnet shunt plate (10), the bearer section member being symmetrical of the plane (7) extending through the axes of the cores (17) and being connected thereto, characterised in that the bearer section member is in the form of two interconnected component section members (6, 6') with a shaping and material distribution such that the heat dissipation of both the section members (6, 6') is the same in relation to a plane (7') perpendicular to the plane (7) of symmetry which extends through the core axes.

2. A beam according to claim 1, characterised in that two component section members (6, 6') are identical in shape and material.

3. A beam according to claim 1, characterised in that the pole end (4') remote from the worn side is in heat-conductive communication by way of at least one heat-conducting bar (12) with the component section member (6') remote from the work side.

4. A beam having a bearer section member (19) having at least one magnet system comprising at least one magnet winding (18), one magnet core (17) and one magnetic shunt strip (24), the or each core (17) being connected to the bearer section member (19), characterised in that each core (17) is connected by way of its pole end (4') carrying the magnetic return strip (24) to a H-shaped bearer section member (19), one electromagnet (3) each being provided preferably symmetrically of the cross-member (20) of the H-shaped bearer section member (19).

5. A beam according to claim 4, characterised in that the core (17) extends beyond the longitudinal members (21) of the H-shaped bearer section member (19) and extends to within a very reduced distance (22) from the operative surface (13), the magnet core (17) projecting only slightly beyond the magnet winding (18).

6. A beam according to claim 4 or 5, characterised in that an independent H-shaped bearer section member (19) is provided for each core (17) and the discrete bearer section members (19) are interconnected by at least one strip.

7. A beam according to any of claims 4 - 6, characterised in that the magnetic return strip (24) is introduced into the cross-member (20) and connected thereto, preferably by a screwed fastening (screw 23).

**Revendications**

1. Poutre d'electro-aimants avec un profilé porteur tubulaire ou en caisson contenant un système magnétique (3) composé d'au moins une bobine (18), un noyau (17) et une barre de culasse (10), le profilé porteur étant symétrique au plan (7) passant par les axes des noyaux (17) et relié aux noyaux (17), caractérisée par le fait que le profilé porteur est composé de deux profilés partiels (6, 6') reliés entre eux, avec une conformation et une répartition de matière des deux profilés partiels (6, 6') telles que l'évacuation de chaleur des deux profilés partiels (6, 6') soit la même par rapport à un plan (7') orienté perpendiculairement au plan de symétrie (7) passant par les axes des noyaux (17).

2. Poutre d'électro-aimants suivant revendication 1, caractérisée par le fait que les deux profilés partiels (6, 6') sont identiques aussi bien par leur forme que par leur matière.

3. Poutre d'électro-aimants suivant revendication 1, caractérisée par le fait que le pole (4') opposé au côté actif est relié au profilé partiel (6') éloigné du côté actif par au moins un rail de conduction thermique (12).

4. Poutre d'électro-aimants avec un profilé porteur (19) contenant au moins un système magnétique composé d'au moins une bobine (18), un noyau (17) et une barre de culasse (24), le(s) noyau(x) (17) étant relié(s) au profilé porteur (19), caractérisée par le fait que chaque noyau (17) est relié par son pôle (4') portant la barre de culasse (24) à un profilé porteur (19) en forme de "H", avec respectivement un électro-aimant (3) prévu de préférence symétriquement à l'âme transversale (20) du profilé porteur (19) en forme de "H".

5. Poutre d'électro-aimants suivant revendication 4, caractérisée par le fait que le noyau (17) dépasse les ailes longitudinales (21) de la structure en "H" (19) et s'approche jusqu'à un écart minimal (22) de la surface active (13), le noyau (17) ne dépassant la bobine (18) que de très peu.

6. Poutre d'électro-aimants suivant l'une des revendications 4 ou 5, caractérisée par le fait qu'un profilé porteur (19) séparé en forme de "H" (19) est prévu pour chaque noyau (17) et que les differents profilés porteurs (19) sont reliés entre eux par au moins une barre.

7. Poutre d'électro-aimants suivant l'une des revendications 4 à 6, caractérisée par le fait que la barre de culasse (24) est insérée dans l'âme transversale (20) et réliée à celle-ci, de préférence par un raccord vissé (vis 23).

Fig. 1

Fig. 2

0 118 486

Fig.4

14

15

7'                                                            7'

16

Fig. 3

4        13

6

8

9

6'

10        12

Fig. 5

22

19

23

25

20

21

24

26

18        17